# EUROPEAN PATENT SPECIFICATION

(11) **EP 1 017 202 B1**
(45) Date of publication and mention of the grant of the patent: **11.04.2007**
(21) Application number: 00200775.5
(22) Date of filing: 14.05.1998
(51) Int. Cl.: H04L 29/06

(54) **System and method for transmitting data from a server application to client nodes**
System und Verfahren zur Datenübermittlung von einem Serverapplikation an Klientknoten
Système et méthode pour la transmission de données d'une application serveur à des noeuds clients

(30) Priority: 14.05.1997 US 855902; 14.05.1997 US 855965; 14.05.1997 US 855977; 14.05.1997 US 856051
(43) Date of publication of application: 05.07.2000
(62) Divisional of application: 98923426.5
(73) Proprietor: Citrix Systems, Inc., Fort Lauderdale, FL 33309 (US)
(72) Inventor: Pedersen, Bradley J., Parkland, FL 33067 (US); Bloomfield, Marc A., Pompano Beach, FL 33062 (US)
(74) Representative: Butler, Michael John

(56) References cited:
- EP-A- 0 483 576
- EP-A- 0 732 834
- US-A- 5 499 343
- US-A- 5 548 726
- ADLER R M: "DISTRIBUTED COORDINATION MODELS FOR CLIENT/SERVER COMPUTING" COMPUTER, vol. 28, no. 4, 1 April 1995 (1995-04-01), pages 14-22, XP000507856

## Description

### Field of the Invention

The present invention relates to execution of applications in a distributed client-server environment and, in particular, to the remote execution of applications written in interpretive languages in a client-server environment.

### Background of the Invention

Client server computer networks typically require that the client and the server establish communications according to some set of preestablished rules. These rules are referred to as communications protocols. Such protocols may be predefined such that every client node uses the same communications protocol as the server node. Alternatively, the server may keep a record of the communications protocol used by each client and use that protocol to communicate with the client when the client sends a request to communicate with the application on the server.

A problem associated with such communications methods is that either the protocol may be too rigidly defined for applications which do not need all the functionality being required, or that the client protocol must be known to the server prior to the client being able to communicate with the server. The present invention seeks to avoid both the rigidity of a predefined protocol and the necessity of precontact knowledge on the part of the server.

Shadowing (transmitting data destined for one client node substantially simultaneously to a second client node) and broadcasting (transmitting the same data substantially simultaneously to more than one client node) typically has been performed using a specialized transmitting application on a server node and specialized receiver applications on each of the client nodes. Shadowing is useful in monitoring data traffic and for creating a redundant copy of information being transmitted for data integrity and system security purposes. Broadcasting is useful in providing the same information to many users, when such information is "real-time" or when the information does not have a per se beginning or ending. For example, a stock price quotation program simply transmits the current prices of various stocks on a given exchange and the list repeats with the latest prices once the list of stocks is exhausted. Thus it is irrelevant to a user that he or she does not specify to the quotation program where to begin the list.

Such programs typically are written with a broadcast program in mind and require specialized receiver programs to receive the data transmitted. If an application has not been written as a broadcast program, the data transmitted by such an application can not typically be broadcast to multiple client nodes.

The present invention attempts to overcome this problem by permitting programs not written for broadcast functionality to be used to broadcast data over a network.

One specialized client server network is the worldwide network of computers commonly known as the "Internet" which has seen explosive growth in the last several years. Much of this growth has been driven by the increase in popularity of the World Wide Web (WWW). The WWW is a collection of files written using HyperText Markup Language (HTML), commonly referred to as "Web pages." HTML files may be accessed and displayed using specialized applications known as "web" browsers, which allow a user to access HTML files using a simple graphical user interface (GUI).

Servers hosting HTML files can communicate using the Hypertext Transfer Protocol (HTTP). HTTP is an application protocol that provides users access to files (which can be in different formats such as text, graphics, images, sound, video, etc.) using the HTML page description language. HTML provides basic document formatting and allows the developer to specify communication "links" to other servers and files. Use of an HTML-compliant client browser involves specification of a link via a Uniform Resource Locator or "URL." Upon such specification, the client makes a TCP/IP request to the server identified in the link and receives a "Web page" in return. Further, organizations can provide HTML files that are accessible from within the organization but not from the WWW. These internal networks and collections of HTML files are commonly referred to as "Intranets."

A file written using HTML includes "tags," which indicate to a browser displaying the file when special action should be taken. For example, a tag may indicate to the browser: (1) that a graphics file should be displayed at a particular point in the document; (2) that certain text should centered, bolded, or otherwise formatted; (3) that the background of a document should be shaded or have a particular pattern; or (4) that a different HTML should be loaded in place of the HTML the browser is currently displaying.

The popularity of the World Wide Web and other HTML applications has attracted marketing and sales efforts from a broad range of companies representing a wide range of industries. As differentiation from other companies becomes increasingly difficult, many companies have attempted to overcome HTML's inherently static nature. Also, organizations utilizing HTML files as a method of sharing information have recognized that an Intranet is a useful method for providing various users with access to more than just information.

One major drawback of HTML files, however, is that they are inherently static. That is, HTML is a "display only" language, which does not easily permit execution of applications within an HTML page. Companies seeking to leverage the popularity and ubiquity of the WWW are increasingly looking for ways to embed applications within an HTML file.

ActiveX^{™} objects are one attempt to provide HTML files with the ability to display executing applications. An ActiveX^{™} object is a data object which can be used with browsers that have an ActiveX^{™} interface. An obvious drawback of these objects is that if a user's browser does not have an ActiveX^{™} interface then it cannot display the executing application. This limits the utility of ActiveX^{™} objects since a primary objective of most HTML pages is to be viewed by as many users as possible.

A programming language called JAVA^{™} also has been proposed as a way to allow executable code to be added to an HTML file. Since JAVA^{™} is a language, it does not require a specific browser interface and has a potentially broader audience. However, a JAVA^{™} program, usually called an applet, is downloaded to the client before executing. This may be problematic for clients lacking sufficient memory to download the applet and, even if the client has enough memory, requires the client to wait for the applet to download. Further, since JAVA^{™} is itself a programming language, existing applications must be rewritten in the JAVA^{™} language before they can be embedded in a Web page.

US 5,548,726 discloses a system for activating a new service in a client server network by dynamically reconfiguring a protocol stack within the server node. A client desiring to access a remote service retrieves the appropriate service object from a communications directory service and uses the service object to set up a communications path.

### Summary of the Invention

From a first aspect the present invention provides a method for communicating between an application program executing on a server node and a plurality of client nodes, the method comprising the steps of:
executing an application program on the server node in response to a request from a first client node to execute the application program;
establishing a first connection between the first client node and the server node in response to the request using a first client protocol stack on the server node;
establishing a second connection between a second client node and the server node using a second client protocol stack on the server node in response to a request from the second client node to access the application program; and
substantially simultaneously transmitting application data associated with the application program through the first and second connections to the first and second client nodes, respectively.

From a second aspect the present invention provides a system for transmitting data associated with an application program to a plurality of client nodes in a client-server network, comprising:
a server node executing an application program in response to a request from a first client node to execute the application program;
a first connection between the server node and the first client node established in response to the request, the first connection including a first client protocol stack on the server node for directing communications between the application program and the first client node;
a second connection between the server node and a second client node established in response to a request from the second client node to access the application program, the second connection including a second client protocol stack on the server node associated with the first client protocol stack; and
means for substantially simultaneously transmitting application data associated with the application program to the first and second client protocol stacks.

In one embodiment, the invention relates to a communications system and method for managing communications between a client node and an application program executing on a server node.

In the following, reference will be made to examples which may be useful for understanding better the invention. Although these examples fall outside the scope of the invention, they relate to features of a broad system in which the invention could be put to use. These examples may hence aid the skilled person in putting the claimed invention into context.

In one example, the method includes establishing a connection between the client node and a general communications port located on the server node. The method further includes creating an endpoint data structure, associating a client space with the endpoint data structure and generating a protocol stack for a specific communications port associated with the application program. Notification is given to a connection manager of the connection and the connection is transferred from the general communications port to the protocol stack of the specific communications port.

In another example, the step of establishing a connection includes the steps of receiving, by a master network information node, an application request from the client node; providing, by the master network information node, to the client node a server address of the server having the requested application; receiving, by the server a request from the client node to connect to the general communications port based on the provided addresses; and establishing a connection between the client node and the general communications port.

In a further example, the communications system includes a server node and a client node. The server node has a general communications port. The client node has a communications device establishing a connection between the client node and the general communications port of the server node. The server node also includes a protocol stack, including an endpoint data structure, and a client space located in memory. The client space is associated with the protocol stack. A communication manager and a notification device are located on the server node. The notification device notifies the connection manager of the connection between the client node and the general communications port and in response, the communications manager transfers the connection between the general communications port and the client node to the protocol stack. In one embodiment the system further includes a multiplexer in communication with each protocol stack of a plurality of protocol stacks.

In yet another example an article of manufacture is provided having computer-readable program means for communicating with a client node embodied thereon. The article includes computer-readable program means for establishing a connection with the client node via a predetermined port; computer-readable program means for creating an endpoint data structure; computer-readable program means for associating a memory space with the endpoint data structure; computer-readable program means for generating a protocol stack associated with the memory space and the associated endpoint data structure; computer-readable program means for notifying a connection manager of the connection between the predetermined port and the client node; and computer-readable program means for transferring the connection between the predetermined port and the client node to the associated protocol stack.

In another example, a method is provided for displaying an executing application in a displayed HTML file without requiring the application to be rewritten in a special language and without requiring the viewing user's browser to support a specialized interface. The application executes on the server, mitigating download time and client-side memory restrictions. Further, a client may invoke execution of multiple applications for multiple pages and travel between the HTML documents without terminating any of the applications.

In another example, a method is provided for displaying an executing application in an HTML page, which begins by receiving an input from a user which signals that the user wants execution of an application program to begin. Parameters of the window in which the application will execute are determined, and a communication channel to the applications window in the HTML page is created. The output of the application program, which is executing on a server, is displayed in the applications window via the communications channel.

In still another example, an apparatus is provided for displaying an executing application in an HTML page comprises a parameter handler and a network executive. The parameter handler receives parameters that are associated with an application execution window included in an HTML file. The parameter handler receives parameters from the parameter handler, causes execution of an application program on a server to begin, and displays the output of the executing application in the application execution window based on the parameters received by the network executive from the parameter handler.

In a further example, an article of manufacture has computer-readable code means for displaying an executing application in an HTML page embodied thereon. The article of manufacture includes computer-readable code means for receiving an input from a client which signals that execution of an application program on a server should begin. The article of manufacture also includes computer-readable code means for determining the parameters of the window in which the executing application will be displayed. Also included is computer-readable code means for creating a communications channel to the HTML page using the determined parameters and computer-readable code means for displaying the output of an application executing on a server in the application window via the communications channel.

In still a further example, a system is provided for embedding an application in an HTML page includes a server, a network executive, a parameter handler, and an HTML file. The server stores and executes application programs. The network executive sends commands to the server indicating that execution of a specific application should begin and the network executive receives output from applications executing on the server. The parameter handler receives parameters and passes them to the network executive. The HTML file includes an application window. The application window passes window parameters to the parameter handler and receives application program output from the network executive.

A further aspect of the invention relates to a system and method for transmitting the same data to more than one client node substantially simultaneously. In one preferred embodiment the invention relates to a method for transmitting the same data substantially simultaneously from an application executing on a server node to at least two client nodes executing a generalized receiver program. The method includes the steps of establishing a connection between a first client node and a first client protocol stack on the server node; establishing a connection between the application executing on the server node and the first client protocol stack; associating a first minimal communications protocol stack with the first client protocol stack; establishing a connection between the application executing on the server node and the first minimal communications protocol stack; establishing a connection between a second client node and a second client protocol stack on the server node; associating a second minimal communications protocol stack with the second client protocol stack; providing a connection between the first minimal protocol stack and the second minimal protocol stack; providing a connection between the second minimal protocol stack and said the second client protocol stack; and transmitting data from the application program to the first client protocol stack and the first minimal protocol stack, substantially simultaneously.

Another preferred embodiment of the invention relates to a communication system including a server and two or more client nodes. In one preferred embodiment the server node comprises an application program; a first client protocol stack in electrical communication with the application program; a first minimal protocol stack in electrical communication with the application program; a second minimal protocol stack in electrical communication with the first minimal protocol stack; and a second client protocol stack in electrical communication with the second minimal protocol stack. In addition the system includes a first client node in electrical communication with the first client protocol stack and a second client node in electrical communication with the second client protocol stack. Data from the application program is transmitted to the client protocol stack and the first minimal protocol stack substantially simultaneously.

In a further illustrative example, a method is provided for remotely executing interpretive languages in a client-server environment. The server to which a client is connected downloads and executes an application written in an interpretive language, such as a JAVA^{™} applet. The server accepts input from, and provides screen data to, the client. This allows the client to appear as if it is executing the application in a traditional manner without requiring the client to expend compute and memory resources hosting and executing the application. Additionally, the server may be able to download the application more quickly than the client. The server also accepts input from the client node, allowing the client node to control and provide input to the downloaded application.

In one further example, a method is provided for remotely executing an application written in an interpretive language which begins by downloading the application to a server node in response to a request made by a client node. A connection is established between the client node and a predetermined communications port located on the server; the server creates an endpoint data structure and associates a client space hosted by the server with the endpoint data structure. The server generates a protocol stack associated with the client space and the associated endpoint data structure, notifies a connection manager of the connection, and transfers the connection between the predetermined communications port and the client node to the associated protocol stack.

In another example, an article of manufacture is provided having computer-readable program means embodied thereon for remotely executing an application written in an interpretive language. The article of manufacture includes: computer-readable program means for downloading the application to a server node in response to a request made by a client node; computer-readable program means for establishing a connection between the client node and a predetermined communications port located on the server; computer-readable program means for creating an endpoint data structure; computer-readable program means for associating a client space hosted by the server with the endpoint data structure; computer-readable program means for generating a protocol stack associated with the client space and the associated endpoint data structure; computer-readable program means for notifying a connection manager of the connection; and computer-readable program means for transferring the connection between the predetermined communications port and the client node to the associated protocol stack.

In still another example a system is provided for remotely executing an application written in an interpretive language. The system includes a server node having a predetermined communications port and a client node having a communications device establishing a connection between the client node and the predetermined communications port of the server node. A protocol stack is located on the server node and the protocol stack includes an endpoint data structure. A client space located in memory on the server node is associated with the protocol stack and provides an execution environment for an application written in an interpretive language. The system further includes a communication manager located on the server node, and a notification device located on the server node. The notification device notifying the connection manager of the connection between the client node and the predetermined communications port and the communications manager transferring the connection between the predetermined communications port and the client node to the protocol stack.

### Brief Description of the Drawings

This invention is pointed out with particularity in the appended claims. The advantages of this invention described above, as well as further advantages, may be better understood by referring to the following description taken in conjunction with the accompanying drawings, in which:
FIG. 1 is a highly schematic diagram of an embodiment of a communication system utilizing the invention;
FIG. 2 is a block diagram of an embodiment of the invention showing the connections between various components of the server of Fig. 1 which occur during communication between the clients and server;
FIG. 3 is a block diagram of an embodiment of the invention that maintains and manages multiple client node connections;
FIG. 4 is a block diagram of an embodiment of the system for embedding applications in an HTML page;
FIG. 5 is a diagrammatic view of a client node;
FIG. 6 is a block diagram of an embodiment of the invention depicting the use of a multiplexer to transmit the same data from an application to more than one client; and
FIG. 7 is a block diagram of the embodiment of the invention in which the broadcast capabilities are increased by fan out.

### Detailed Description Of The Invention

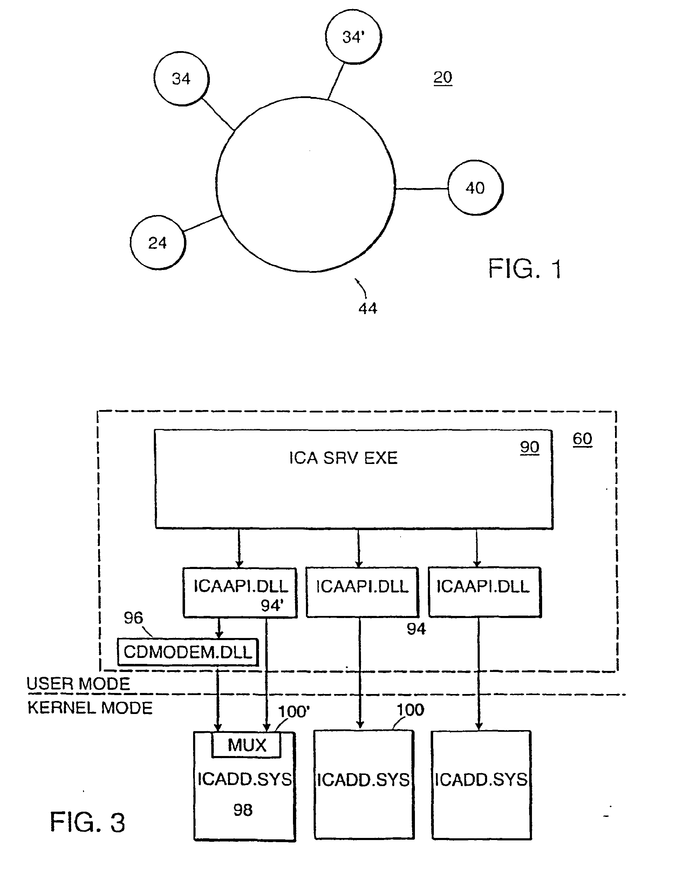

Referring now to FIG. 1, in brief overview, a typical network 20 includes at least one client node 24, at least one server node 34, 34', and a master network information node 40 connected together by a communications link 44. The embodiment shown in Fig. 1 depicts the communications link 44 as a local area network ring or LAN ring, but any communication topology may be used. For the purpose of explanation the server node 34 is assumed to have the application 30 requested by the client node 24. Also, for the purpose of explanation, the master network information node 40 is assumed to be a distinct server node, but in actuality the master network information node 40 may be an application execution server node 34. It should be noted that on a given LAN several nodes may be capable of acting as a network information node, but at any one time only one of such nodes is designated the master network information node 40 for the system 20 and it is to this node that client requests for server information are directed.

The master network information node 40 maintains a table of addresses for the application execution server nodes 34, 34'. In addition, the master network information node 40 receives messages from each application execution server node 34, 34' indicating its level of activity. The level of activity of the application execution server nodes 34, 34' is maintained in a table along with the address of each of the application execution server nodes 34 and is used by the communications system 44 for load leveling.

When the client 24 wishes to have an application executed on an application execution server node 34, the client node 24 sends a request to the general communications port previously defined by the communications protocol or to the "well-known" communications port on the master network information node 40. In one embodiment the communication takes place by way of a datagram service. The master network information node 40 accesses the table of server addresses and returns a message containing the address of the application execution server or application server 34 which has the requested application and also which has the least load. Subsequent communications are automatically addressed by the client also to a "well-known" or predefined general communications port on the server node 34. In one embodiment, the type of protocol with which the initial query was made to the master network information node 40 determines the protocol of the information returned by the master network information node 40 to the client node 24. Thus if the request were made using a TCP/IP datagram, the master network information node 40 would return the TCP/IP address of the server 34 to the client node 24 and the client node 24 would subsequently establish contact with the server node 34 using that protocol. In another embodiment, the datagram requesting an application address by a client 24 includes a request for a different type of protocol than the one used to send the request to the master network information node 40. For example, the client 24 may make a request to the master network information node 40 using the IPX protocol and request the address of the application server as a TCP/IP protocol address.

When a client node 24 (actually a client process 56 on a client node 24) desires to communicate with an application on a server node 34, 34' the client node 24 begins by issuing a network request to determine the location of the server 34 having the desired application. This request is received by the master network information node 40 (also referred to as a network browser 40) residing somewhere on the network. In this Fig. 1, the network browser 40 is shown for simplicity as residing on a different server 40 from the server which has the application, but such may generally not be the case.

The network master information node 40 returns the network address of the server node 34 having the desired application 30 to the client node 24. The client node 24 then uses the information received from the network master information node 40 to request connection to the application executing on the specified server 34. As is described above, such a connection is first established to a "well-known" communications port and is later transferred to a specific communications port under control of a connection manager. The specific communications port is associated with the application executing on the server node 34 which then communicates with the client node 24 through the specific communications port.

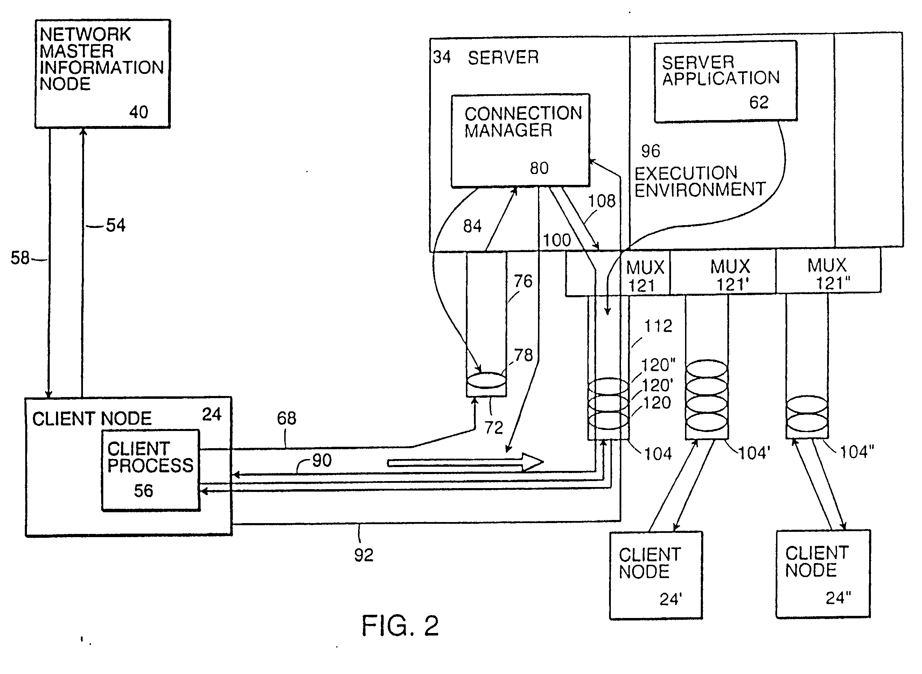

In more detail, and referring to Fig. 2, the client process 56 on client node 24 makes a request 54 to the network master information node 40 to obtain the address of a server node 34 which includes the desired application 62. The network master information node 40 returns to the client node 24 a message 58 containing the address of the server node 34 which includes the server application 62. In one embodiment, the protocol used at this point of the connection is a datagram service.

The client node 24 uses the returned address to establish a communication channel 68 with the server 34. The port number used by the client 24 corresponds to the "well-known port" in the server 34 which has been defined by the network protocol as the port by which the server 34 establishes communication connections with clients 24. The well-known port 72 has a rudimentary protocol stack 76 which includes primarily an endpoint data structure 78.

The endpoint data structure 78 points to the communication protocol stack 76 and client connection thereby establishing a unique representation or "handle" for the client 24. The endpoint data structure 78 permits the connection between the server 34 and the client 24 to be moved at will between the connection manager 80 and the various applications 62 on the server 34. The endpoint data structure 78, in one embodiment, not only contains the handle to the client 24 but may also contain other information relating to the client connection. In the embodiment shown, the application server 34 monitors activity on a specific communications system (e.g. LAN or WAN) and has initialized this minimum protocol stack 76 with only the necessary protocol modules needed to support a "TTY" communication mode. The "TTY" communication mode is a simple ASCII stream with no protocol assumptions above the transport layer. That is, there are no protocol layers for compression, encryption, reliability, framing, or presentation of transmitted data. Thus a client node 24 seeking an application 62 running on the server 34 establishes a connection to the well-known communications port 72 with the minimum protocol set needed to support a TTY communication mode.

A connection manager 80 executing on the server node 34 is "listening" to the well-known communications port 72 for a connection request 68. When a connection request 68 is received from the client node 24, the connection manager 80 is notified 84. The connection manager 80 knows which protocol is being used based on the notification 84.

With this information the connection manager 80 creates a new minimum protocol communications stack 104, starts the execution environment 96 and binds the new minimum protocol stack 104 to the execution environment 96. In one embodiment, the server 34 includes a number of execution environments 96 which have been previously been started, but which have not been associated with a communications port. In this embodiment, the pre-connection starting of the execution environments permits a faster response time than if each execution environment 96 is started when the connection request is received from the client 24. When the execution environment 96 is started, the server application 62 requested by the client 24 is also started. In another embodiment, if the client 24 does not specify an application, either a default application is started or simply the execution environment 96 with no application is started.

The connection manager 80 then moves the client connection, including the unique client identifier or handle, from the well-known port 76 to the new minimum protocol stack 104. The connection manager 80, using the minimum protocol stack sends a TTY data stream that indicates service is available. Thus, this method for detecting a client connection is independent of the port to which the connection is first established. If the client node 24 does not respond within a prescribed time period (e.g. 5 seconds) to the service available message, a resends of the "service available" message is performed by the server 34.

If the client 24 receives the message, the client 24 sends a TTY string indicating that the "service available" message was detected. The client 24 waits for the server 34 to respond and if the response is not within a prescribed time interval (e.g. 5 seconds) the client 24 resends the message. The connection manager 80 then queries 90 the client 24 asking for the client's default communication parameters. This query 90 takes the form of a message which is passed back to the client 24 and which indicates that the client 24 should respond with details regarding what protocols the client 24 would like to use in the connection.

In response, the client 24 sends a set of protocol packets 92; each packet of which is used to specify a required or optional protocol module that is being requested from the server 34. In one embodiment, the number of packets in the set is variable with one packet being sent for each protocol requested. In another embodiment, the number of packets that is being sent is included in the header of the first packet. In a third embodiment, the remaining number of packets being sent is included in the header of each packet and is decremented with each succeeding packet sent. Thus, the client 24 may respond to the query 90 by indicating that, for example, encryption and data compression will be used. In such a case, two protocol packets will be sent from the client 24 to the server 34 and, in one embodiment, the header of the first packet will indicate the number of packets as two.

Once the responses to the query 90 have been received, the connection manager 80 builds a protocol stack using protocol drivers 120, 120', 120" which correspond to the protocols requested by the client node 24. In one embodiment, the connection manager 80 places each of the required protocol drivers 120, 120', 120' ', corresponding to the requested client protocols (e.g. an encryption driver if encryption is desired by the client) into the protocol stack "container" 112 and links them together. This dynamic process allows a client node 24 to specify the contents of a protocol stack dynamically without requiring that the server 34 have a prior protocol stack description for a particular client node 24. Using this method, multiple clients 24 may be served by a single server, even if the separate clients 24 have vastly differing requirements for the associated communications channel. In the embodiment shown, each client 24, 24', 24' ' is associated with a respective communications protocol stack 104, 104' and 104''. Such dynamically extensible protocol stacks are described in more detail below and in United States Patent Application Serial No. 08/540,891, filed on October 11, 1995.

In the embodiment just discussed, the "container" 112 is a user level or kernel level device driver, such as an NT^{™} device driver. This container driver provides ancillary support for the inner protocol modules or "drivers" (generally 120) which correspond to the protocol requirements of the client node 24. This ancillary support is in the form of helper routines that, for example, aid one protocol driver to transfer data to the next driver. Alternatively, in another embodiment each protocol driver is a complete user-level or kernel-level driver in itself.

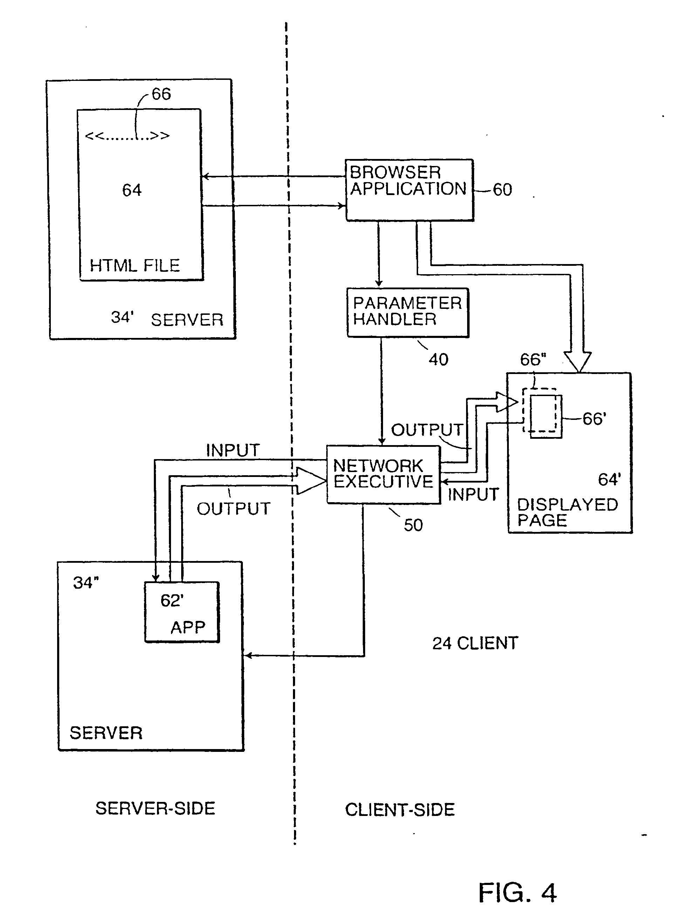

Referring now to the embodiment depicted in FIG. 3, the communications manager 60 includes two main software modules: ICASRV.EXE 90 and ICAAPI.DLL 94. In the embodiment shown, ICASRV.EXE 90 is the server side of a client/server interface. ICASRV.EXE 90 manages all communications states and is, in one embodiment, implemented as a WINDOWS NT^{™} service. A second part of the connection manager 60 is ICAAPI.DLL 94. ICAAPI.DLL 94 establishes the connection with the client, establishes the protocols to be used and notifies ICASRV.EXE 90 of the completion of the protocol stack. In one embodiment, a third module CDMODEM.DLL 96 is linked to ICAAPI.DLL 94'. CDMODEM.DLL 96 is a module which ICAAPI.DLL 94' uses to communicate with modem devices.

The connection methodology described above can be used for a client 24 running a Web browser program. For the purposes of this specification, the user running the Web browser program will be referred to as the "viewing user." The terms "server" or "server node" will be used to refer to machines hosting HTML files or applications that may be executed. For example, a viewing user runs a Web browser on a client node and makes file requests via the HTTP protocol to servers. The servers respond by transmitting file data to the client via the HTTP protocol. The Web browser run on the client receives the transmitted data and displays the data as an HTML page to the viewing user.

In brief overview and referring to FIG. 4, an HTML file 64 located on a server 34' and constructed in accordance with an embodiment of the invention includes a generic embedded window tag 66. The generic embedded window tag 66 is any data construct which indicates to a browser 60 displaying the HTML file 64 that a generic embedded window 66' should be displayed at a particular location in the HTML page 64' described by the HTML file 64. The generic embedded window tag 66 may include additional information, such as height of the window, width of the window, border style of the window, background color or pattern in the window, which applications may be displayed in the window, how often the output display should be updated, or any other additional information that is useful to enhance display of the application output.

Some examples of generic embedded window tags that can be embedded in an HTML file follow.

### ActiveX^{™} tag

<object classid="clsid:238f6f83-b8b4-11cf-8771-00a024541ee3"
data="/ica/direct.ica"CODEBASE="/cab/wfica.cab"
   width=436 height=295>
   <param name="Start" value="Auto">
   <param name="Border" value="On">
</object>

### Netscape Plugin^{™} tag

<embed src="http://www.citrix.com/ica/direct.ica" pluginspage="http://www.citrix.com/plugin.html"
height=295 width=436 Start=Auto Border=On>
<embed>

### JAVA^{™} tag

<applet code=JICA.class width=436 height=295>

| | |
|---|---|
| <param name=Address | value="128.4.1.64"> |
| <param name=InitialProgram | value= Microsoft Word 7.0> |
| <param name=Start | value=Auto> |
| <param name=Border | value=On> |

</applet>

In each case above, the tag indicates that a window having a height of 295 pixels and a width of 436 pixels should be drawn to receive application output. Each tag also specifies that the application should automatically start execution and that the window in which the application output is displayed should be drawn with a border. The ActiveX^{™} and Netscape Plugin^{™} tags have the remote application parameters specified in the file "direct.ica" located in the directory "/ica." The JAVA^{™} tag specifies the remote application parameters directly. In the example above, the address of the server hosting the application is specified as well as the name of the application to be executed.

The browser application 60 accesses the HTML file 64 by issuing a request to a specific Uniform Resource Locator (URL) address. The server 34' hosting the HTML file 64 transmits the HTML file 64 data to the browser application 60, which displays text and translates any tags that are included in the HTML file 64. The browser application 60 displays the HTML file 64 data as an HTML page 64'. If a generic embedded window tag 66 is present in the HTML file 64, such as one of the tags described above, the browser 60 draws a blank window 66' in the displayed HTML page 64'.

Execution of the desired application 62' may commence immediately upon display of the HTML page 64' or execution may await some signal, e.g. a specified user input which indicates execution of the application 62' should begin. Once execution of the application 62' is commenced, the browser application 60 instantiates a parameter handler 40 associated with the application window 66'. The parameter handler 40 instance may be spawned as a child process of the browser application 60, as a peer process of the browser application 60, or as a Dynamically Linked Library ("DLL") associated with the browser application 60.

The browser application 60 passes any specific parameters associated with the application window 66' that were provided by the generic embedded window 66 tag to the parameter handler 40 instance. Additionally, the browser application 60 may pass the handle for the application window 66' to the parameter handler 40 instance or the parameter handler 40 instance may query the browser application 60 to retrieve the handle for the application window 66'. The parameter handler 40 instance also spawns a network executive 50. The network executive 50 may be spawned as a child process of the parameter handler 40 instance or as a peer process of the parameter handler 40 instance.

The parameter handler 40 instance forwards any specified application window 66' parameters to the network executive 50. Parameters which are not specified by the parameter handler 40 instance or the embedded generic window tag 66 may be set to default values. The network executive 50 may have certain parameter defaults hard-coded, or the network executive 50 may access a file which contains parameter defaults.

The network executive 50 creates its own application output window 66". The network executive 50 creates its application output window 66" as a child of the displayed application window 66' and displays its application output window 66" directly over the parent window 66' drawn by the browser application 60. Since the application output window 66" drawn by the network executive 50 is a child of the application window 66' drawn by the browser application 60, the application output window 66" inherits various properties of its parent including position information. Accordingly, the application output window 66" will follow the application window 66' as the viewing user scrolls the screen of the browser application 60 or performs other actions which vary the position of the application window 66'.

The network executive 50 also establishes a communications channel with the server 60 and invokes execution of the desired application 62' by the server 34" using the connection methodology described above. The network executive 50, which acts as the client in the above description, passes any parameters it received from the parameter handler 40 instantiation to the server, along with any necessary default values. If a parameter is not passed to the server, the server may request the parameter if it is a necessary parameter which has no default value, e.g. "user id," or it may provide a default value for the parameter, e.g. execution priority. The server 34" begins execution of the desired application program 62' and directs the output to the network executive 50. The network executive 50 receives data from the application program 62' and displays the output data in its application output window 66". Since the application output window 66" is drawn on top of the application window 66' drawn by the browser application 60, the application output data is displayed in the HTML page 64'. As noted above, the application output window 66" drawn by the network executive 50 is a child of the application window 66' drawn by the browser application 60. This allows the application output window 66" to scroll as the HTML page 64' is scrolled.

The application output window 66" also receives input from the viewing user. Raw input data, e.g. a mouse click, is received into the application output window 66" by the network executive 50. The network executive 50 forwards the raw input data to the application 62' executing on the server 34". In this manner, the viewing user is able to interact with the application 62' via the HTML page 64'.

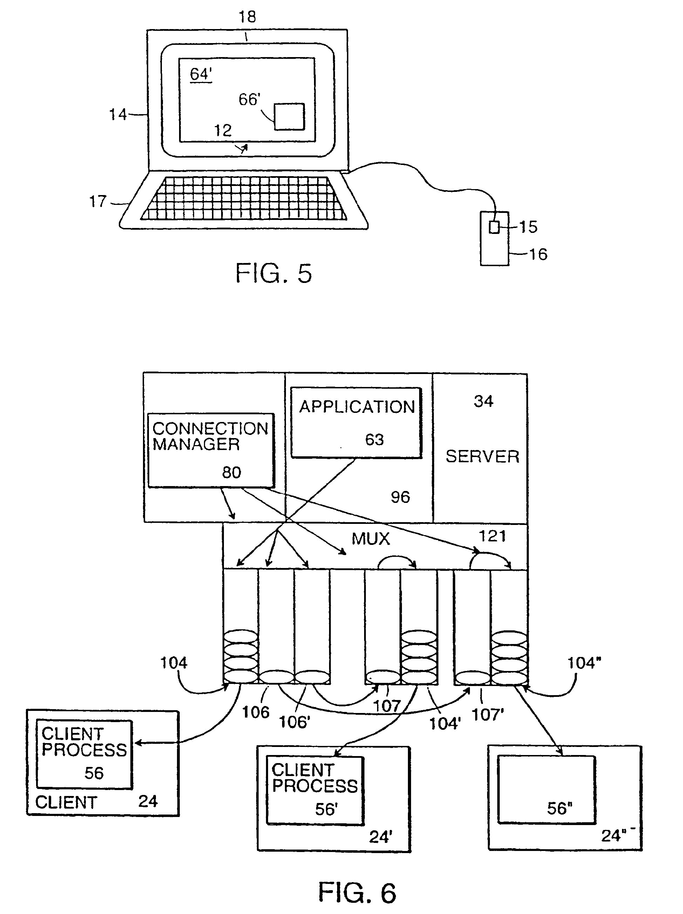

Referring now to FIG. 5, the viewing user uses a so-called "browser" program to display an HTML page 64' having an application window 66' on the screen 18 of the user's computer 14. The viewing user may invoke execution of an application program 62'. Typically this is done by the user utilizing a "point-and-click" interface, i.e. the viewing user uses a mouse 16 to manipulate a cursor 12 that is also displayed on the screen 18 of the viewing user's computer 14. Once the cursor 12 is over a particular portion of the HTML page 64', the viewing user signals by "clicking" a button 15 on the mouse 16. Alternatively, the viewing user may also signal by pressing a key on an associated keyboard 17, such as the "return" key. In other embodiments, the viewing user may not use a mouse 16 at all, but may instead use a touchpad, a trackball, a pressure-sensitive tablet and pen, or some other input mechanism for manipulating the cursor 12.

In another embodiment, the application window 66', or another portion of the HTML page 64', may define a "hot zone." When the viewing user moves the cursor 12 into the "hot zone," execution of the application 62' on the server 34" is started.

Once the viewing user has indicated that execution of the application 62' should commence, the browser application 60 instantiates a parameter handler 40 and passes the instantiation parameters associated with the applications window 66' by the generic embedded window tag 66. The parameter handler 40 instance spawns a network executive 50 and passes to it the parameters of the application window 66'. The network executive 50 determines which application 62' is to be invoked, and on what server 34" that application 62' resides. Generally this information is passed to it by the parameter handler 40 instance which gets it from the browser application 60 in the form of the generic embedded window tag 66, but the network executive 50 may need to query a master network information node 40 or other various servers, in order to determine which servers, if any, host the desired application 62'. The network executive 50 then begins execution of the application and displays the output of the application program 62' in the applications window 66' as described in detail above.

The network executive 50 continues to directly display application output in the applications output window 66" until the viewing user indicates that execution of the application 62' should stop, e.g. by closing the application window 66', or until the viewing user clicks on a tag indicating that a different HTML page should be displayed. When this occurs, execution of the application 62' can be terminated. It is preferred, however, is to "cache" the connection. In effect, the first parameter handler 40 instance is not immediately terminated. However, the application 62' continues executing with a reduced priority level, i.e. in "background" mode, because the first parameter handles 40 no longer has "focus".

In general, it is desirable to accomplish connection caching by providing the parameter handler 40 source code with a globally accessible data structure for registering instances. For example, the parameter handler 40 may be provided with a globally accessible linked list data structure, data array, data table, or other data structure. Because the data structure is globally available, each instance of the parameter handler 40 is able to read and write the data structure. This allows each instance of the parameter handler 40 to "register" with every other instance by writing to the data structure to signal its existence.

For embodiments in which no other connection information is stored, a predetermined limit on the number of connections that may be cached at any one time can be set. In these embodiments if registration of an instance would result in an excess number of cached connections, one of the "cached" connections is removed, i.e. the parameter handler 40 instantiation associated with that connection is notified that it should terminate. Before termination, the parameter handler 40 notifies its associated network executive 50 that it should terminate. In turn, the network executive 50 closes its session with the server hosting the application program 62' and then terminates.

In embodiments in which other information is stored, the additional information may be used to more effectively manage the cached connections. For example, if a user has not actively viewed an HTML page 64' in a predetermined number of minutes, e.g. ten minutes, the parameter handler 40 instantiation is instructed to terminate, the session with the hosting server is terminated, and the parameter handler 40 instance removes its entry in the registry.

Cached connection information may be managed using any known cache management scheme. Connection entries may be discarded on a "first in, first out" basis, i.e. the oldest entry is discarded each time a new entry must be added. Alternatively, cached connection information entries may be discarded on a "least recently used" basis, which discards information relating to connections which have been used the least amount by the user. Other cache management techniques, such as random replacement, may also be used.

If the viewing user returns to a previous HTML page 64' having a cached connection, the network executive 50 associated with the HTML page 64' is returned to the foreground, i.e., it regains "focus", and processing of the associated application resumes at a normal priority level. If necessary, the network executive 50 reestablishes the connection with the application 62'. Although no output data is stored by the network executive 50 for cached connections, as soon as a connection is re-established for an applications window 66' the connection to the application 62' is re-established and the application 10 again writes directly to the applications window 66'.

Similarly, the connection methodology described above may be used to provide remote execution of an application written in an interpretive language. Referring once again to FIG. 2, a client node 24 is connected to a server node 34 which executes an application 62 on behalf of the client node 24. In this example, the server application 62 is any application which allows the client node 24 to request an application written in an interpretive language. For example, the application 62 may be a Web browser which allows the client node 24 to download JAVA^{™} applications using URL addresses. As just described, the node from which the application is downloaded and the server node 34 are separate machines interconnected by a computer network. However, in some embodiments those machines may be one and the same.

In order to avoid requiring the client node 24 to store and execute the downloaded application, which can be prohibitive both in terms of client memory and processor usage, the execution environment 96 on the server node 34 with which the client node 24 is associated provides an execution environment for the downloaded application. The execution environment interprets the byte stream of the downloaded application to produce a series of commands representing the application. If the application is written in the JAVA™ interpretive language, the execution environment is sometimes referred to as a "virtual JAVA^{™} machine".

In some embodiments the execution environment includes a compiler. These compilers convert the byte stream of the application into "native" code. For example, a compiler may convert the byte stream of an application written in the JAVA^{™} application language into 80486 machine code. Conversion of the interpretive language byte stream into native code allows the application to execute faster than if each byte must interpreted and executed at run-time. Some compilers, however, may compile the byte stream while the application is executing. These compilers are sometimes referred to as "just in time" compilers, and usually look a predetermined number of bytes ahead of the currently-executing instruction executing in order to produce a steady stream of compiled code.

The downloaded application is interpreted and executed by the server node 24 and the output of the application is transmitted to the client node as described in connection with FIG. 2. The server node 34 also accepts input from the client node 24. This allows the client node 24 to control the downloaded application or provide input to the application. The server node 34 may set up a separate execution environment to interpret and execute the downloaded application. In these embodiments, the execution environment associated with the downloaded application would also direct its output to mux 121.

Referring to Fig. 6, it should be noted that any client 24, 24', 24' ', or in fact, all the clients (generally 24) attached to server 34 with the application 63 may be another server 34', 34". In this manner, data transmitted by the application 63 is sent to other servers prior to being sent to client nodes 24. In this manner, data transmitted by the application 63 is transmitted to an ever increasing number of client nodes as this network fans out.

When each client 24 terminates its connection with the server 34, each client protocol stack (generally 104) and its associated minimal stack (generally 107) is destroyed. Similarly, the minimal protocol stack (generally 106) associated with the first client protocol stack 104 is also destroyed. When the last of the minimal 107 and second (and subsequent) client protocol stacks 104 has terminated, the configuration is as it was initially with only a first client communications protocol stack 104 associated with the execution environment 96. Note that until all the second and subsequent client protocol stacks 104 are terminated, the first client protocol stack 104 may not be destroyed, even if the first client 24 is no longer present.

As shown in Fig. 2, each execution environment 96 communicates with each protocol stack 104 through a multiplexer 121, 121', 121". Now referring also to Fig. 6, with the present invention it is possible for more than one client to receive data being transmitted to the first client 24, for example, in order to shadow or monitor the transmission of data from a server 34 or to broadcast data from a specialized broadcast application, such as a stock quotation application, from which the same data is broadcast or transmitted substantially simultaneously to a number of clients (generally 24).

In such a case, the first client 24 causes the specialized application 63 to execute and transmit its data to the client 24 as discussed previously. When a second client 24' requests access to the broadcast application 63, the connection manager 80 begins to construct the protocol stack 104' for the second client 24' as previously discussed with regard to the first client 24. However, because the application 63 is a broadcast application, the connection manager 80 recognizes that it need not start an additional execution environment 96 and instead takes the steps necessary to send the data from the broadcast application 63 to the second client 24' and any additional clients 24".

First, the connection manager 80 creates a first minimal communications protocol stack 106 which it associates with a communications protocol stack 104 of the first client 24. The connection manager 80 next creates a second minimal protocol stack 107 and associates it with the communications protocol stack 104' of the second client 24'. As each additional client 24" requests access to the broadcast application 63, another minimal protocol stack 106' is created and associated with the first client protocol stack 104 and another minimal protocol stack 107' and client protocol stack 104" is created for each new client 24". The first client protocol stack 104 and all the minimal protocol stacks 106, 106' associated with the first client protocol stack 104, and each pair of client protocol stacks 104', 104" and minimal protocol stacks 107, 107' associated with each additional client 24', 24'' are in communication by way of a multiplexer 121.

When multiplexer 121 is directing data to or receiving data from only one client 24, the multiplexer 121 is acting as a simple pass-through device. However, when there is more than one client 24, 24', 24" receiving data from or transmitting data to a single application 63, each multiplexer (generally 121) takes on two additional configurations. In one configuration, the multiplexer 121' is configured to send application data to or receive data from both the first client protocol stack 104 and each of the minimal communications protocol stacks 106, 106' associated with it. In the second configuration the multiplexer 121" is configured to send data received by the minimal protocol stack 107, 107' to the client protocol stack 104', 104", respectively, associated with it. In this embodiment, the mux 121 may receive input data directly from each client protocol stack 104, 104', 104".

The connection manager 80 connects the minimal protocol stacks 106, 106' associated with the first client 24 with the minimal protocol stacks 107, 107' respectively, of the second 24' and subsequent clients 24" and instructs the multiplexer 121 to direct output from the application 63 to the communications protocol stack 104 of the first client 24 and its associated minimal protocol stacks 106, 106'. The multiplexer 121 is also instructed by the connection manager 80 to connect each second and subsequent client minimal protocol stack 107, 107' to its associated client protocol stack 104, 104', respectively. Data transmitted to the first client 24 by way of the first client protocol stack 104 is therefore also transmitted to the minimal protocol stacks 106, 106' associated with the first client 24 and hence to the second 24' and subsequent clients 24" by way of their associated protocol stacks 104', 104", respectively, and associated minimal protocol stacks 107, 107', respectively. In one embodiment, the protocol stack container includes a data structure to keep track of the number and type of protocols associated with a given application 63.

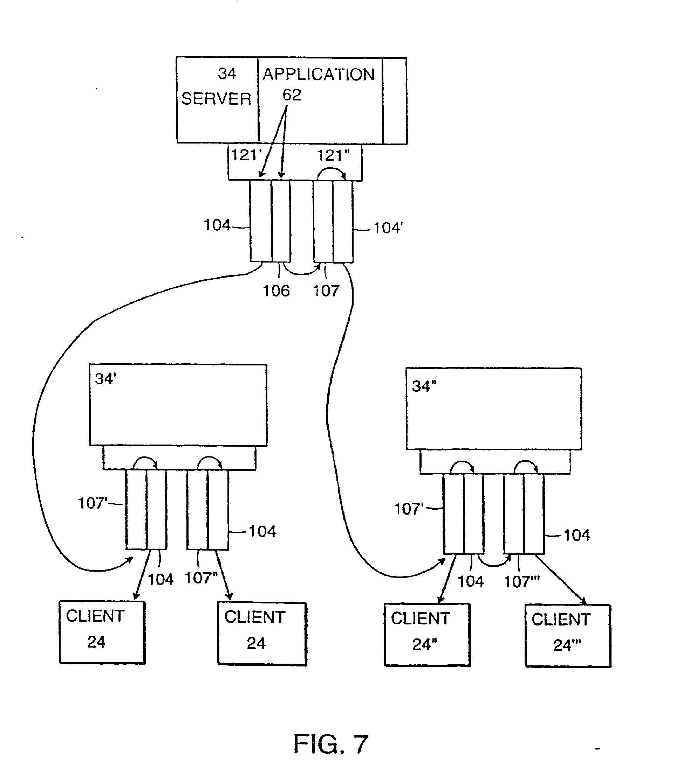

Referring to Fig. 7, as discussed above, it is possible that the "clients" of one server 34 be other servers 34' and 34" (only two being shown for simplicity). The second servers 34' and 34" then transmit the data to clients (generally 24) or to additional servers. In this embodiment the output of the server protocol stack (generally 104) is connected to the protocol stacks 107' of the secondary servers 34', 34". Then as described previously, the data is transmitted between the protocol stacks and out to the clients (generally 24). In this manner the data may fan out and be distributed to many more clients than may reasonably be supported by one server.

While the invention has been particularly shown and described with reference to specific preferred embodiments, it should be understood by those skilled in the art that various changes in form and detail may be made therein without departing from the scope of the invention defined by the appended claims.

## Claims

1. A method for communicating between an application program executing on a server node (34) and a plurality of client nodes (24), the method comprising the steps of:
executing an application program on the server node in response to a request from a first client node (24) to execute the application program;
establishing a first connection between the first client node and the server node in response to the request using a first client protocol stack (104) on the server node;
establishing a second connection between a second client node (24') and the server node using a second client protocol stack (104') on the server node in response to a request from the second client node to access the application program; and
substantially simultaneously transmitting application data associated with the application program through the first and second connections to the first and second client nodes, respectively.

2. The method of claim 1 further comprising the steps of:
transmitting input data through one of the connections from one of the client nodes (24) to the application program executing on the server node (34); and
transmitting the input data to the other client node through the other connection.

3. The method of claim 1 or 2 wherein the application data transmitted through the second connection includes a copy of the application data transmitted to the first connection.

4. The method of claim 1, 2 or 3 further comprising the steps of:
generating a third client protocol stack (104") on the server node (34) in communication with the second client protocol stack (104'); and
generating a fourth client protocol stack on the server node in communication with the third client protocol stack and the second client node (24'),
wherein the second connection includes the third and fourth client protocol stacks.

5. The method of any of claims 1 to 4 further comprising the steps of:
providing an execution environment (96) on the server node (34) within which to execute the application program; and
associating the execution environment with the first and second client protocol stacks (104,104').

6. The method of any preceding claim wherein the application program is a first application program and the second connection includes a third client protocol stack (104') on the server node (34), and further comprising the steps of:
executing a second application program on the server node in response to a request from the second client node (24') to execute the second application program;
associating an execution environment for executing the second application program with the third client protocol stack;
transmitting application data associated with execution of the first application program through the second and third client protocol stacks of the second connection; and
transmitting application data associated with execution of the second application program through the third client protocol stack.

7. The method of any preceding claim further comprising the steps of:
generating a new client protocol stack for each additional client node requesting access to the application program executing on the server node;
associating each new client protocol stack with the first client protocol stack (104);
establishing for each new client protocol stack a new connection between the application program executing on the server node and the additional client node associated with that new client protocol stack; and
substantially simultaneously transmitting application data associated with the application program through each new connection to each additional client node.

8. A method as claimed in any preceding claim for transmitting the same data substantially simultaneously from an application executing on a server node (34) to at least two client nodes (24), each client node executing a generalized receiver program, wherein establishing the first connection comprises:
providing a connection between the first client node (24) and the first client protocol stack (104) on said server node;
providing a connection between said application executing on said server node and said first client protocol stack; and
providing a connection between said application executing on said server node and a first minimal communications protocol stack (106),
establishing the second connection comprises:
providing a connection between the second client node (24') and the second client protocol stack (104') on said server node;
providing a connection between said first minimal protocol stack and a second minimal protocol stack (107) ; and
providing a connection between said second minimal protocol stack and said second client protocol stack, and
wherein the step of substantially simultaneously transmitting application data of the first and second client nodes comprises transmitting data from said application program to said first client protocol stack and said first minimal protocol stack substantially simultaneously.

9. The method of any preceding claim wherein said connection between said first client protocol stack (104) and said application program occurs through a multiplexer (121).

10. The method of claim 8 or 9 wherein said connection between said first minimal protocol stack (106) and said application program occurs through a multiplexer (121).

11. The method of claim 8, 9 or 10 wherein said connection between said second client protocol stack (104') and said second minimal protocol stack (107) occurs through a multiplexer (121).

12. The method of any of claims 8 to 11 further comprising the step of associating the first minimal protocol stack (106) with said first client protocol stack (104').

13. The method of any of claims 8 to 12 further comprising the step of associating the second minimal communications protocol stack with said second client protocol stack.

14. The method of any preceding claim further comprising the step of determining whether said application program is suitable for broadcast.

15. A system for transmitting data associated with an application program to a plurality of client nodes (24) in a client-server network, comprising:
a server node (34) executing an application program in response to a request from a first client node (24) to execute the application program;
a first connection between the server node and the first client node established in response to the request, the first connection including a first client protocol stack (104)on the server node for directing communications between the application program and the first client node;
a second connection between the server node and a second client node (24') established in response to a request from the second client node to access the application program, the second connection including a second client protocol stack (104') on the server node associated with the first client protocol stack; and
means for substantially simultaneously transmitting application data associated with the application program to the first and second client protocol stacks.

16. The system of claim 15 wherein the first connection comprises:
the first client protocol stack (104) being in electrical communication with said application program;
the first client (24) being in electrical communication with said first client protocol stack (104); and
a first minimal protocol stack (106) in electrical communication with said application program,
wherein the second connection comprises:
a second minimal protocol stack (107) in electrical communication with said first minimal protocol stack;
the second client (24") protocol stack (104') being in electrical communication with said second minimal protocol stack and,
the second client being in electrical communication with said second client protocol stack; and
whereby said data from said application program is transmitted to said first client protocol stack and said first minimal protocol stack substantially simultaneously.

17. The system of claim 15 or 16 wherein the means for substantially simultaneously transmitting application data includes a multiplexer (121) in communication with each connection and the application program executing on the server node (34).

18. The system of any of claims 15 to 17 wherein the application data transmitted to the second client protocol stack (104') includes a copy of the application data transmitted to the first client protocol stack (104).

19. The system of any of claims 15 or 18 wherein the second connection further comprises a third client protocol stack (104") on the server node (34) in communication with the second client protocol stack (104'), and a fourth client protocol stack on the server node in communication with the third client protocol stack.

20. The system of any of claims 15 to 19 wherein the server node (34) further comprises an execution environment (96) in which to execute the application program, the execution environment concurrently communicating with the first client protocol stack (104) and each client protocol stack associated with the first client protocol stack.

21. The system of any of claims 15 to 20 wherein each client protocol stack includes a set of protocol modules and the set of protocol modules in the second client protocol stack (104') differs from the set of protocol modules in the first client protocol stack (104).

22. The system of any of claims 15 to 21 wherein the server node is a first server node (34), and further comprising a second server node (34') in communication with the first server node and the first client node (24), and wherein the first connection between the first client node and the first server node is through the second server node.

## Patentansprüche

1. Verfahren zum Kommunizieren zwischen einen Anwendungsprogramm, das auf einem Serverknoten (34) zur Ausführung kommt, und einer Mehrzahl von Klientenknoten (24), wobei das Verfahren folgende Schritte umfasst:
Ausführen eines Anwendungsprogramms auf dem Serverknoten in Reaktion auf eine Anfrage von einem ersten Klientenknoten (24), um das Anwendungsprogramm auszuführen,
Einrichten einer ersten Verbindung zwischen dem ersten Klientenknoten und dem Serverknoten in Reaktion auf die Anfrage, wobei eine erster Klientenprotokollstapel (104) auf dem Serverknoten verwendet wird,
Einrichten einer zweiten Verbindung zwischen einem zweiten Klientenknoten (24') und dem Serverknoten, wobei ein zweiter Klientenprotokollstapel (104') auf dem Serverknoten verwendet wird, in Reaktion auf eine Anfrage von dem zweiten Klientenknoten, um auf das Anwendungsprogramm zuzugreifen, und
im wesentlichen gleichzeitiges Übertragen von Anwendungsdaten, die dem Anwendungsprogramm zugeordnet sind, durch die erste und zweite Verbindung zu dem ersten bzw. zweiten Klientenknoten.

2. Verfahren nach Anspruch 1, das weiterhin die Schritte umfasst:
Übertragen von Eingabedaten durch eine der Verbindungen von einem der Klientenknoten (24) zu dem Anwendungsprogramm, das auf dem Serverknoten (34) zur Ausführung kommt, und
Übertragen der Eingabedaten zu dem anderen Klientenknoten durch die andere Verbindung.

3. Verfahren nach Anspruch 1 oder 2 bei dem die Anwendungsdaten, die durch die zweite Verbindung übertragen werden, eine Kopie der Anwendungsdaten aufweisen, die zu der ersten Verbindung übertragen werden.

4. Verfahren nach Anspruch 1, 2 oder 3, das weiterhin die Schritte umfasst:
Erzeugen eines dritten Klientenprotokollstapels (104' ') auf dem auf dem Serverknoten (34) in Kommunikation mit dem zweiten Klientenprotokollstapel (104'), und
Erzeugen eines vierten Klientenprotokollstapels auf dem Serverknoten in Kommunikation zu dem dritten Klientenprotokollstapel und dem zweiten Klientenknoten (24'),
wobei die zweite Verbindung den dritten und vierten Klientenprotokollstapel aufweist.

5. Verfahren nach einem der Ansprüche 1 bis 4, das weiterhin die Schritte umfasst:
Bereitstellen einer Ausführungsumgebung (96) auf dem Serverknoten (34), innerhalb der das Anwendungsprogramm auszuführen ist, und
Zuordnen der Ausführungsumgebung zu dem ersten und zweiten Klientenprotokollstapel (104, 104').

6. Verfahren nach einem der vorstehenden Ansprüche, bei dem das Anwendungsprogramm ein erstes Anwendungsprogramm ist und die zweite Verbindung einen dritten Klientenprotokollstapel (104') auf dem Serverknoten (34) umfasst, und das weiterhin die Schritte umfasst:
Ausführen eines zweiten Anwendungsprogramms auf dem Serverknoten in Reaktion auf eine Anfrage von dem zweiten Klientenknoten (24'), um das zweite Anwendungsprogramm auszuführen,
Zuordnen einer Ausführungsumgebung zum Ausführen des zweiten Anwendungsprogramms mit dem dritten Klientenprotokollstapel,
Übertragen von Anwendungsdaten, die einer Ausführung des ersten Anwendungsprogramms zugeordnet sind, durch den zweiten und dritten Klientenprotokollstapel der zweiten Verbindung, und
Übertragen von Anwendungsdaten, die einer Ausführung des zweiten Anwendungsprogramms zugeordnet sind, durch den dritten Klientenprotokollstapel.

7. Verfahren nach einer der vorstehenden Ansprüche, das weiterhin folgende Schritte umfasst:
Erzeugen eines neuen Klientenprotokollstapels für jeden zusätzlichen Klientenknoten, der einen Zugriff auf das Anwendungsprogramm erfragt, das auf dem Serverknoten zur Ausführung kommt,
Zuordnen jedes neuen Klientenprotokollstapels zu dem ersten Klientenprotokollstapel (104),
Einrichten für jeden neuen Klientenprotokollstapel einer neuen Verbindung zwischen dem Anwendungsprogramm, das auf dem Serverknoten zur Ausführung kommt, und dem zusätzlichen Klientenknoten, der dem neuen Klientenprotokollstapel zugeordnet ist, und
im wesentlichen gleichzeitiges Übertragen von Anwendungsdaten, die dem Anwendungsprogramm zugeordnet sind, durch jede neue Verbindung zu jedem zusätzlichen Klientenknoten.

8. Verfahren nach einem der vorstehenden Ansprüche zum Übertragen der selben bzw. gleichen Daten im wesentlichen gleichzeitig von einem Anwendungsprogramm, das auf einem Serverknoten (34) zur Ausführung kommt, zu zumindest zwei Klientenknoten (24), wobei jeder Klientenknoten ein verallgemeinertes Empfängerprogramm ausführt, wobei der Schritt des Einrichtens der ersten Verbindung umfasst:
Bereitstellen einer Verbindung zwischen dem ersten Klientenknoten (24) und dem ersten Klientenprotokollstapel (104) auf dem Serverknoten,
Bereitstellen einer Verbindung zwischen der Anwendung, die auf dem Serverknoten zur Ausführung kommt, und dem ersten Klientenprotokollstapel, und
Bereitstellen einer Verbindung zwischen der Anwendung, die auf dem Serverknoten zur Ausführung kommt, und einem ersten minimalen Kommunikationsprotokollstapel (106),
wobei der Schritt des Einrichtens der zweiten Verbindung umfasst:
Bereitstellen einer Verbindung zwischen dem zweiten Klientenknoten (24') und dem zweiten Klientenprotokollstapel (104') auf dem Serverknoten,
Bereitstellen einer Verbindung zwischen dem ersten minimalen Protokollstapel und einem zweiten minimalen Protokollstapel (107), und
Bereitstellen einer Verbindung zwischen dem zweiten minimalen Protokollstapel und dem zweiten Klientenprotokollstapel, und
wobei der Schritt des im wesentlichen gleichzeitigen Übertragens von Anwendungsdaten des ersten und zweiten Klientenknotens den Schritt des Übertragens von Daten von dem Anwendungsprogramm zu dem ersten Klientenprotokollstapel und dem ersten minimalen Protokollstapel im wesentlichen gleichzeitig umfasst.

9. Verfahren nach einem der vorstehenden Ansprüche, bei dem die Verbindung zwischen dem ersten Klientenprotokollstapel (104) und dem Anwendungsprogramm durch einen Multiplexer (121) erfolgt.

10. Verfahren nach Anspruch 8 oder 9, bei dem die Verbindung zwischen dem ersten minimalen Protokollstapel (106) und dem Anwendungsprogramm durch einen Multiplexer (121) erfolgt.

11. Verfahren nach Anspruch 8, 9 oder 10, bei dem die Verbindung zwischen dem zweiten Klientenprotokollstapel (104') und dem zweiten minimalen Protokollstapel (107) durch einen Multiplexer (121) erfolgt.

12. Verfahren nach einem der Ansprüche 8 bis 11, das weiterhin den Schritt des Zuordnens des ersten minimalen Protokollstapels (106) zu dem ersten Klientenprotokollstapel (104') umfasst.

13. Verfahren nach einem der Ansprüche 8 bis 12, das weiterhin den Schritt des Zuordnens des zweiten minimalen Kommunikationsprotokollstapels zu dem zweiten Klientenprotokollstapel umfasst.

14. Verfahren nach einem der vorstehenden Ansprüche, das weiterhin den Schritt des Bestimmens umfasst, ob das Anwendungsprogramm für eine Übertragung bzw. Rundfunk geeignet ist.

15. System zum Übertragen von Daten, die einem Anwendungsprogramm zugeordnet sind, zu einer Mehrzahl von Klientenknoten (24) in einem Klientenservernetzwerk, mit:
einem Serverknoten (34), der ein Anwendungsprogramm ausführt, in Reaktion auf eine Anfrage von einem ersten Klientenknoten (24), um das Anwendungsprogramm auszuführen,
einer ersten Verbindung zwischen dem Serverknoten und dem ersten Klientenknoten, der in Reaktion auf die Anfrage eingerichtet ist, wobei die erste Verbindung einen ersten Klientenprotokollstapel (104) auf dem Serverknoten aufweist, um Kommunikationen zwischen dem Anwendungsprogramm und dem ersten Klientenknoten zu leiten,
einer zweiten Verbindung zwischen dem Serverknoten und einem zweiten Klientenknoten (24'), der in Reaktion auf eine Anfrage von dem zweiten Klientenknoten eingerichtet ist, um auf das Anwendungsprogramm zuzugreifen, wobei die zweite Verbindung einen zweiten Klientenprotokollstapel (104') auf dem Serverknoten umfasst, der dem ersten Klientenprotokollstapel zugeordnet ist, und
Mittel zum im wesentlichen gleichzeitigen Übertragen von Anwendungsdaten, die dem Anwendungsprogramm zugeordnet sind, zu dem ersten und zweiten Klientenprotokollstapel.

16. System nach Anspruch 15, bei dem die erste Verbindung aufweist:
den ersten Klientenprotokollstapel (104), der in elektrischer Kommunikation zu dem Anwendungsprogramm ist,
den ersten Klienten (24), der in elektrischer Kommunikation zu dem ersten Klientenprotokollstapel (104) ist, und
einen ersten minimalen Protokollstapel (106) in elektrischer Kommunikation zu dem Anwendungsprogramm,
wobei die zweite Verbindung aufweist:
einen zweiten minimalen Protokollstapel (107) in elektrischer Kommunikation zu dem ersten minimalen Protokollstapel,
den zweiten Klienten- (24") Protokollstapel (104'), der in elektrischer Kommunikation zu dem zweiten minimalen Protokollstapel ist, und
den zweiten Klienten, der in elektrischer Kommunikation zu dem zweiten Klientenprotokollstapel ist, und
wobei die Daten von dem Anwendungsprogramm zu dem ersten Klientenprotokollstapel und dem ersten minimalen Protokollstapel im wesentlichen gleichzeitig übertragen sind.

17. System nach Anspruch 15 oder 16, bei dem das Mittel zum wesentlichen gleichzeitigen Übertragen von Anwendungsdaten einen Multiplexer (121) in Kommunikation zu jeder Verbindung und dem Anwendungsprogramm, das auf dem Serverknoten (34) zur Ausführung kommt, aufweist.

18. System nach einem der Ansprüche 15 bis 17, bei dem die Anwendungsdaten, die zu dem zweiten Klientenprotokollstapel (104') übertragen werden, eine Kopie der Anwendungsdaten aufweisen, die zu dem ersten Klientenprotokollstapel (104) übertragen werden.

19. System nach Anspruch 15 oder 18, bei dem die zweite Verbindung weiterhin einen dritten Klientenprotokollstapel (104'') auf dem Serverknoten (34) in Kommunikation zu dem zweiten Klientenprotokollstapel (104') aufweist, und einen vierten Klientenprotokollstapel auf dem Serverknoten in Kommunikation zu dem dritte Klientenprotokollstapel.

20. System nach einem der Ansprüche 15 bis 19, bei dem der Serverknoten (34) weiterhin eine Ausführungsumgebung (96) aufweist, in der das Anwendungsprogramm auszuführen ist, wobei die Ausführungsumgebung gleichzeitig mit dem ersten Klientenprotokollstapel (104) und jedem Klientenprotokollstapel kommuniziert, der dem ersten Klientenprotokollstapel zugeordnet ist.

21. System, nach einem der Ansprüche 15 bis 20, bei dem jeder Klientenprotokollstapel einen Satz von Protokollmodulen aufweist und der Satz von Protokollmodulen in dem zweiten Klientenprotokollstapel (104') sich von dem Satz von Protokollmodulen in dem ersten Klientenprotokollstapel (104) unterscheidet.

22. System nach einem der Ansprüche 15 bis 21, bei dem der Serverknoten ein erster Serverknoten (34) ist und das weiterhin einen zweiten Serverknoten (34) in Kommunikation zu dem ersten Serverknoten und dem ersten Klientenknoten (24) aufweist, und wobei die erste Verbindung zwischen dem ersten Klientenknoten und dem ersten Serverknoten durch den zweiten Serverknoten ist.

## Revendications

1. Procédé pour établir une communication entre une exécution de programme d'application sur un noeud de serveur (34) et une pluralité de noeuds de client (24), le procédé comprenant les étapes :
d'exécution d'un programme d'application sur le noeud de serveur en réponse à une demande d'un premier noeud de client (24) quant à l'exécution du programme d'application ;
d'établissement, en réponse à la demande, d'une première connexion entre le premier noeud de client et le noeud de, serveur en utilisant une première pile de protocoles de client (104) sur le noeud de serveur;
d'établissement d'une deuxième connexion entre un deuxième noeud de client (24') et le noeud de serveur en utilisant une deuxième pile de protocoles de client (104') sur le noeud de serveur en réponse à une demande du deuxième noeud de client quant à l'accès au programme d'application ; et
de transmission sensiblement, simultanée de données d'application associées au programme d'application, par l'intermédiaire des première et deuxième connexions, respectivement, aux premier et deuxième noeuds de client.

2. Procédé selon la revendication 1, comprenant en outre les étapes :
de transmission de données d'entrée, par l'intermédiaire de l'une des connexions, de l'un des noeuds de client (24) à l'exécution de programme d'application sur le noeud de serveur (34) ; et
de transmission des données d'entrée à l'autre noeud de client par l'intermédiaire de l'autre connexion.

3. Procédé selon la revendication 1 ou 2, dans lequel les données d'application transmises par l'intermédiaire de la deuxième connexion comprennent une copie des données d'application transmises à la première connexion.

4. Procédé selon la revendication 1, 2 ou 3, comprenant en outre les étapes :
de génération d'une troisième pile de protocoles de client (104'') sur le noeud de serveur (34) en communication avec la deuxième pile de protocoles de client (104') ; et
de génération d'une quatrième pile de protocoles de client sur le noeud de serveur en communication avec la troisième pile de protocoles de client et le deuxième noeud de client (24'),
dans lequel la deuxième connexion inclut les troisième et quatrième piles de protocoles de client.

5. Procédé selon l'une quelconque des revendications 1 à 4, comprenant en outre les étapes :
d'établissement d'un environnement d'exécution (96) sur le noeud de serveur (34) à l'intérieur duquel le programme d'application est exécuté ; et
d'association de l'environnement d'exécution avec les première et deuxième piles de protocoles de client (104, 104').

6. Procédé selon l'une quelconque des revendications précédentes, dans lequel le programme d'application est un premier programme d'application et la deuxième connexion inclut une troisième pile de protocoles de client (104'') sur le noeud de serveur (34), et comprenant en outre les étapes :
d'exécution d'un second programme d'application sur le noeud de serveur en réponse à une demande du deuxième noeud de client (24') quant à l'exécution du second programme d'application ;
d'association d'un environnement d'exécution permettant d'exécuter le second programme d'application avec la troisième pile de protocoles de client ;
de transmission de données d'application associées à une exécution du premier programme d'application par l'intermédiaire des deuxième et troisième piles de protocoles de client de la deuxième connexion ; et
de transmission de données d'application associées à une exécution du second programme d'application par l'intermédiaire de la troisième pile de protocoles de client.

7. Procédé selon l'une quelconque des revendications précédentes, comprenant en outre les étapes :
de production d'une nouvelle pile de protocoles de client pour chaque noeud de client supplémentaire demandant un accès à l'exécution de programme d'application sur le noeud de serveur ;
d'association de chaque nouvelle pile de protocoles de client avec la première pile de protocoles de client (104) ;
d'établissement, pour chaque nouvelle pile de protocoles de client, d'une nouvelle connexion entre l'exécution de programme d'application sur le noeud de serveur et le noeud de client supplémentaire associé à cette nouvelle pile de protocoles de client ; et
de transmission sensiblement simultanée de données d'application associées au programme d'application, par l'intermédiaire de chaque nouvelle connexion, à chaque noeud de client supplémentaire.

8. Procédé selon l'une quelconque des revendications précédentes, permettant de transmettre sensiblement simultanément les mêmes données d'une exécution d'application sur un noeud de serveur (34) à au moins deux noeuds de client (24), chaque noeud de client exécutant un programme récepteur polyvalent, dans lequel l'établissement de la première connexion comprend:
l'établissement d'une connexion entre le premier noeud de client (24) et la première pile de protocoles de client (104) sur ledit noeud de serveur ;
l'établissement d'une connexion entre ladite exécution d'application sur ledit noeud de serveur et ladite première pile de protocoles de client ; et
l'établissement d'une connexion entre ladite exécution d'application sur ledit noeud de serveur et une première pile minimale de protocoles de communications (106),
l'établissement de la deuxième connexion comprend :
l'établissement d'une connexion entre le deuxième de client (24') et la deuxième pile de protocoles de client (104') sur ledit noeud de serveur ;
l'établissement d'une connexion entre ladite première pile minimale de protocoles et une deuxième pile minimale de protocoles (107) ; et
l'établissement d'une connexion entre ladite deuxième pile minimale de protocoles et ladite deuxième pile de protocoles de client, et
dans lequel l'étape de transmission sensiblement simultanée de données d'application des premier et deuxième noeuds de client comprend une transmission sensiblement simultanée de données dudit programme d'application à ladite première pile de protocoles de client et à ladite première pile minimale de protocoles.

9. Procédé selon l'une quelconque des revendications précédentes, dans lequel ladite connexion entre ladite première pile de protocoles de client (104) et ledit programme d'application est obtenue par un multiplexeur (121).

10. Procédé selon la revendication 8 ou 9, dans lequel ladite connexion entre ladite première pile minimale de protocoles (106) et ledit programme d'application est obtenue par un multiplexeur (121).

11. Procédé selon la revendication 8, 9 ou 10, dans lequel ladite connexion entre ladite deuxième pile de protocoles de client (104') et ladite deuxième pile minimale de protocoles (107) est obtenue par un multiplexeur (121).

12. Procédé selon l'une quelconque des revendications 8 à 11, comprenant en outre l'étape d'association de la première pile minimale de protocoles (106) avec ladite première pile de protocoles de client (104').

13. Procédé selon l'une quelconque des revendications 8 à 12, comprenant en outre l'étape d'association de la deuxième pile minimale de protocoles de communications avec ladite deuxième pile de protocoles de client.

14. Procédé selon l'une quelconque des revendications précédentes, comprenant en outre l'étape de détermination du fait que ledit programme d'application est, ou non, approprié pour une diffusion.

15. Système pour transmettre des données associées à un programme d'application à une pluralité de noeuds de client (24) dans un réseau clients - serveurs, comprenant :
un noeud de serveur (34) exécutant un programme d'application en réponse à une demande d'un premier noeud de client (24) quant à l'exécution du programme d'application ;
une première connexion entre le noeud de serveur et le premier noeud de client établie en réponse à la demande, la première connexion incluant une première pile de protocoles de client (104) sur le noeud de serveur destinée à diriger des communications entre le programme d'application et le premier noeud de client;
une deuxième connexion entre le noeud de serveur et un deuxième noeud de client (24') établie en réponse à une demande du deuxième noeud de client quant à l'accès au programme d'application, la deuxième connexion incluant une deuxième pile de protocoles de client (104') sur le noeud de serveur associé à la première pile de protocoles de client ; et
un moyen permettant une transmission sensiblement simultanée de données d'application associées au programme d'application aux première et deuxième piles de protocoles de client.

16. Système selon la revendication 15, dans lequel la première connexion comprend :
le fait que la première pile de protocoles de client (104) est en communication électrique avec ledit programme d'application ;
le fait que le premier noeud de client (24) est en communication électrique avec ladite première pile de protocoles de client (104) ; et
une première pile minimale de protocoles (106) en communication électrique avec ledit programme d'application,
dans lequel la deuxième connexion comprend :
une deuxième pile minimale de protocoles (107) en communication électrique avec ladite première pile minimale de protocoles ;
le fait que la deuxième pile de protocoles (104') de noeud de client (24") est en communication électrique avec ladite deuxième pile minimale de protocoles, et
le fait que le deuxième client est en communication électrique avec ladite deuxième pile de protocoles de client ; et
ce par quoi lesdites données dudit programme d'application sont transmises, sensiblement simultanément, à ladite première pile de protocoles de client et à ladite première pile minimale de protocoles.

17. Système selon la revendication 15 ou 16, dans lequel les moyens permettant une transmission sensiblement simultanée de données d'application incluent un multiplexeur (121) en communication avec chaque connexion et l'exécution de programme d'application sur le noeud de serveur (34).

18. Système selon l'une quelconque des revendications 15 à 17, dans lequel les données d'application transmises à la deuxième pile de protocoles de client (104') comprennent une copie des données d'application transmises à la première pile de protocoles de client (104).

19. Système selon l'une quelconque des revendications 15 à 18, dans lequel la deuxième connexion comprend en outre une troisième pile de protocoles de client (104'') sur le noeud de serveur (34) en communication avec la deuxième pile de protocoles de client (104'), et une quatrième pile de protocoles de client sur le noeud de serveur en communication avec la troisième pile de protocoles de client.

20. Système selon l'une quelconque des revendications 15 à 19, dans lequel le noeud de serveur (34) comprend en outre un environnement d'exécution (96) dans lequel, pour exécuter le programme d'application, l'environnement d'exécution communique de façon concurrente avec la première pile de protocoles de client (104) et chaque pile de protocoles de client associée à la première pile de protocoles de client.

21. Système selon l'une quelconque des revendications 15 à 20, dans lequel chaque pile de protocoles de client inclut un ensemble de modules de protocoles, et dans lequel l'ensemble de modules de protocoles de la deuxième pile de protocoles de client (104') est différent de l'ensemble de modules de protocoles de la première pile de protocoles de client (104).

22. Système selon l'une quelconque des revendications 15 à 21, dans lequel le noeud de serveur est un premier noeud de serveur (34), et comprenant en outre un deuxième noeud de serveur (34') en communication avec le premier noeud de serveur et avec le premier noeud de client (24), ét dans lequel la première connexion établie entre le premier noeud de client et le premier noeud de serveur est obtenue par l'intermédiaire du deuxième noeud de serveur.
